(19) Europäisches Patentamt / European Patent Office / Office européen des brevets

(11) EP 2 027 680 B1

(12) EUROPEAN PATENT SPECIFICATION

(45) Date of publication and mention
of the grant of the patent:
**31.10.2018  Bulletin 2018/44**

(21) Application number: **07725892.9**

(22) Date of filing: **06.06.2007**

(51) Int Cl.:
*H04L 29/06* [(2006.01)]     *H04W 12/04* [(2009.01)]
*H04W 12/08* [(2009.01)]     *H04W 84/18* [(2009.01)]

(86) International application number:
**PCT/EP2007/005046**

(87) International publication number:
**WO 2007/144106 (21.12.2007 Gazette 2007/51)**

(54) **METHOD FOR OPERATING A WIRELESS SENSOR NETWORK**

VERFAHREN ZUM BETREIBEN EINES DRAHTLOSENSENSORNETZES

PROCÉDÉ D'EXPLOITATION D'UN RÉSEAU DE CAPTEURS SANS FIL

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **12.06.2006  DE 102006027462**

(43) Date of publication of application:
**25.02.2009  Bulletin 2009/09**

(73) Proprietor: **NEC Corporation
Tokyo 108-8001 (JP)**

(72) Inventors:
• **GIRAO, Joao
67063 Ludwigshafen (DE)**
• **MARTIN LOPEZ, Miguel
67063 Ludwigshafen (DE)**

(74) Representative: **Patent- und Rechtsanwälte
Ullrich & Naumann
PartG mbB
Schneidmühlstrasse 21
69115 Heidelberg (DE)**

(56) References cited:
**EP-A- 1 335 563        EP-A- 1 450 233
EP-A2- 1 513 288        WO-A-2006/048840
US-A1- 2006 075 248**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to method for operating a wireless sensor network, wherein the sensor network comprises a multitude of sensor nodes for sensing data, the sensor nodes being distributed within a predefinable environment, and wherein the sensor nodes can exchange information among each other via encrypted data transmissions over a radio channel.

Methods of the present kind have been known in practice for some time, because sensor networks have been gaining importance and are being applied in particular in the area of environmental monitoring, for example to analyze weather, humidity distributions or contamination of water, or to measure the temperature of surfaces, to track movement patterns, to control big industrial sites etc. The list of possible fields of application could be extended almost arbitrarily.

The individual sensors of a sensor network are sensor nodes that communicate in a wireless way with each other and that, in general, consist of a sensing element, a processing unit, a communication device and an energy source - for example a battery or solar cells. Functionalities of data acquisition, communication and computation are combined in the sensor nodes on a very small space. This miniature design is extremely advantageous for specific applications, for example, said environment monitoring, because it enables the deployment of the sensor nodes, and consequently an application of the network, also in areas that are hard to access.

Critical parameters, which possibly could restrict the possible fields of application of sensor networks, are in particular given physical values of the individual sensor nodes, for example, their transmission range, processor power, battery capacity, available storage capacity or the like. Due to these physical restrictions, the energy-efficient organization of the sensor network is of particular importance.

Another important aspect, which has to be taken into consideration when building up a sensor network, is a secure transmission of the data sensed by the sensor nodes. The platform forming the base of the sensor node shows in general extremely small dimensions and does in general not have a tamper resistant unit. In order to increase security of data transmission in sensor networks, the sensed data of the individual sensor nodes are generally transmitted in an encrypted form. To do so, in general a continuous encryption is chosen, i.e. the sensed data is encrypted directly at the sensor node and only decrypted after receipt at the tamper-resistant sink node (end-to-end encryption).

In particular the limited energy resources resulting from the sensor nodes being battery-powered are the reason why it is not acceptable to apply constantly asymmetric encryption methods within the network. Such an approach would cut short the lifetime of the network and make it inappropriate for most applications. Most methods for key distribution are hence based on a kind of dynamic key distribution. As soon as the sensors are deployed in an environment to be examined and the network is stable after an initialization/set-up phase, the key pool of unused keys of the master key is generally erased in the individual sensor nodes, in order to prevent that a potential attacker that has access to the hardware gains knowledge to any key, other than the one being used at the node.

Document EP 1 513 288 A2 discloses a method and apparatus for provisioning secure wireless sensors.

Document EP 1 335 563 A discloses a method for making a wireless communication secure through two different interfaces.

In the case of the known methods it is disadvantageous that said methods are extremely inflexible during the operational phase in what respects to the performance of changes in the network. These problems occur in particular in two specific situations. On the one hand, the problems of said kind occur after a certain operational lifetime of the sensor network, i.e. when sensor nodes start breaking down due to hardware problems, failure of battery or possibly even due to physical destruction. In this case there is often a high interest on the side of the network operator to replace the harmed nodes by new nodes, in order to again strengthen the coverage of the examined environment.

In the second case the problems result from the fact that it turns out during operation that there are nodes within the network that deliver obviously wrong measurement data that in turn statistically falsify the overall measurements of the network. The wrong measurements can result, for example, from a de-calibration, from an unfortunately bad positioning when deploying the nodes (for example under a tree or in a rivulet), or from an external manipulation. In any case, the network operator will be interested in excluding the wrongly working nodes from the network.

In both described cases the possibilities for the network operator are very restricted. Due to the loss of knowledge regarding the keys used by the sensor node as described above, it is very difficult to integrate new nodes into the encrypted data transmission as established in the network or to exclude nodes of the network from such. Even in case that the knowledge about the key distribution between the nodes were still available, new nodes could hardly be integrated from the view of point of costs, because they would first of all have to be programmed according to the detailed requirements of the customer and be adapted to the used keys, in order to enable the sensor nodes to integrate into the existing network. In other words, a network operator would first have to find out which keys are currently used in the network to configure these keys then into the nodes to be newly integrated.

It is therefore an object of the present invention to specify a method for operating a wireless sensor network of the above-mentioned kind, according to which changes of the network can be performed in a flexible way during the operational phase of the network, in particular regarding the composition of the sensor nodes that are integrated into the network.

The invention is set out in the appended set of claims. The embodiments and/or examples of the following description which are not covered by the appended claims are considered as not being part of the present invention.

In accordance with the invention, the aforementioned object is accomplished by a method for operating a wireless sensor network comprising the features of patent claim 1. According to this claim such a method is characterized in that a subset of sensor nodes of the network is manipulated in order to establish a shared secret (x) by transferring a defined information to the sensor nodes of the subset over a secure out of band (OOB) channel.

According to the invention, it has first been recognized that during the stable operational phase, i.e. after the initialization phase during which the network organizes itself is finished, changes to the network can be realized without loss of security by using an out of band channel (OOB). The out of band channel is generally inherently secure. According to the invention, a subset of sensor nodes of the network is transferred certain information over the out of band channel. This information received by the sensor nodes is used for the establishment of a secret shared by the recipient sensor nodes. The shared secret can be generated by using a pre-definable algorithm from the received information. With the method according to the invention it is hence possible to insert a new key securely during the operational phase.

In a specifically advantageous way, the out of band channel is separated from the radio channel, so they work completely independently one from the other. This may be a logical separation from the regular data flow or a physical separation.

In the context of an advantageous embodiment it may be provided that the information is transferred to the subset of sensor nodes by exposing the sensor nodes to a pre-definable temporal sequence of optical and/or acoustic impulses. In a particularly simple way the optical impulses may be generated with a torch, and the acoustic impulses with a buzzer.

In the context of a further advantageous embodiment it may be provided that the information is transferred to the subset of sensor nodes by a movement. In case of this embodiment, the sensor nodes are designed in such a way that they can detect movements. For this purpose, the sensor nodes may be equipped, for example, with an accelerometer. When the network operator takes the subset of sensors in his hand and shakes them all together, shared information can be transferred to the subset of sensor nodes in a very simple way.

In principle, the kind of transferring information is not limited, it only needs to be ensured that the sensor is able to detect the information. When using, for example, optical impulses, the sensor nodes need to include a corresponding light-sensitive element. Against this background it can consequently be provided for transferring the information on the subset of sensor nodes in general in form of a sequence of measured values sensed by the sensor nodes. In this sense, the information could be transferred to the sensor nodes, for example, in form of measured temperature values. In such cases a certain tolerance has to be ensured, so that only variations in the measured values (for example measured temperature values) that exceed a certain threshold do result in different shared secrets, whereas small variations result in the same shared secrets.

Regarding a simple manageability, the sequence of optical and acoustic impulses or the sequence of measured values is translated into a binary sequence of numbers by the involved sensor nodes. In order to realize a uniform and well defined length and structure, it may further be provided that the binary sequence of numbers is translated into a hash value which then forms the shared secret of the involved sensor nodes.

Regarding a further increase of security, it may be provided that the sensor nodes of the network are informed by a message about a manipulation to come, wherein the message may be generated by a specific node, preferably by a sink node of the network. With this message the nodes may be informed, for example, that within the next five seconds a manipulation is to be expected. The nodes may be preprogrammed in such a manner that they would ignore a manipulation, for example in form of an irradiation of light impulses, if they had not received such an information message of the described kind in advance. By these means it can be avoided that the sensor nodes react to a manipulation attempt initiated by a malicious attacker.

Regarding an integration of new sensor nodes into the network it may be provided that the manipulation is performed on a subset of sensor nodes of the network - old nodes - as well as on the sensor nodes to be integrated newly - new nodes. Regarding a high level of security, the manipulation is preferably performed in a controlled environment. For example, the network administrator could collect some of the old nodes and expose them in his palm, together with the nodes to be newly integrated, to light from a torch.

Moreover, it may be provided that the manipulated sensor nodes authenticate among each other based on the shared secret. The authentication may be performed, for example, with a symmetric message authentication code (MAC) computed on the base of the shared secret. After the authentication is performed, the manipulated sensor nodes, based on the shared secret, can agree on a key for a secure data transmission in the context of a key exchange protocol. The manipulated old nodes, i.e. those nodes that were already integrated into the network, function consequently as a kind of bridge or interface, as they can exchange encrypted data in a secure way both with the newly integrated nodes as well as with the rest of the nodes of the network.

In the context of a concrete embodiment the key exchange is performed according to the Diffie-Hellmann algorithm. Regarding power saving, it may alternatively be provided that the key exchange is performed according to a modified Diffie-Hellmann algorithm with simplified public parameters. Instead of generating an exponential value, for example, a pure multiplication may be provided. Since the shared secret is neither transmitted in the context of the authentication nor in the context of the key agreement, the length of the secret can be chosen to be rather small. In practice a length in the range of about 20 bit should prove to be sufficient.

Regarding an exclusion of sensor nodes from the network - for example due to a malfunction or de-calibration - it proves to be advantageous to combine the information transferred to a subset of sensor nodes over the out of band channel always with a value - hereinafter called evidence - that is generated by the sensor nodes itself, in order to generate a new key for the data exchange on that base.

In the simplest form, the evidence can be a function of values sensed by the sensor node. If the measured values of a manipulated sensor node do not fall inside a certain measurement range, the evidence computed by the sensor node deviates from the evidences of other manipulated nodes, and the node hence generates a wrong key. This effectively equals an exclusion of the node from the network.

In view of a higher flexibility regarding the exclusion criteria, it may be provided that the evidence is not only a function of measured values sensed by the sensor nodes, but moreover a function of an additional parameter. In an advantageous way, the parameter is transmitted to the sensor nodes together with the information transferred to the sensor nodes over the out of band channel. The deployed parameters may refer, for example, to the time of an initial measurement that is employed for the evidence, to the number of measured values that are to be considered when computing the average value, to the width or the center of a measurement's tolerance, etc. In principle, all parameters can be envisioned that refer to values which can be employed for the refinement of exclusion criteria.

There are several ways of how to design and further develop the teaching of the present invention in an advantageous way. To this end, it is to be referred to the patent claims subordinate to patent claim 1 on the one hand and to the following explanation of preferred examples of an embodiment of the invention, illustrated by the figure on the other hand. In connection with the explanation of the preferred examples of an embodiment by the aid of the figure, generally preferred embodiments and further developments of the teaching will be explained. In the drawing,

Fig. 1     shows an example of an embodiment of the method according to the invention for operating a wireless sensor network, wherein new nodes are integrated into the network,

Fig. 2     shows an example of an embodiment for manipulating sensor nodes with optic impulses,

Fig. 3     shows an example of an embodiment for generating an authenticated symmetric key and

Fig. 4     shows an example of an embodiment of the method according to the invention, wherein sensor nodes are excluded from the network.

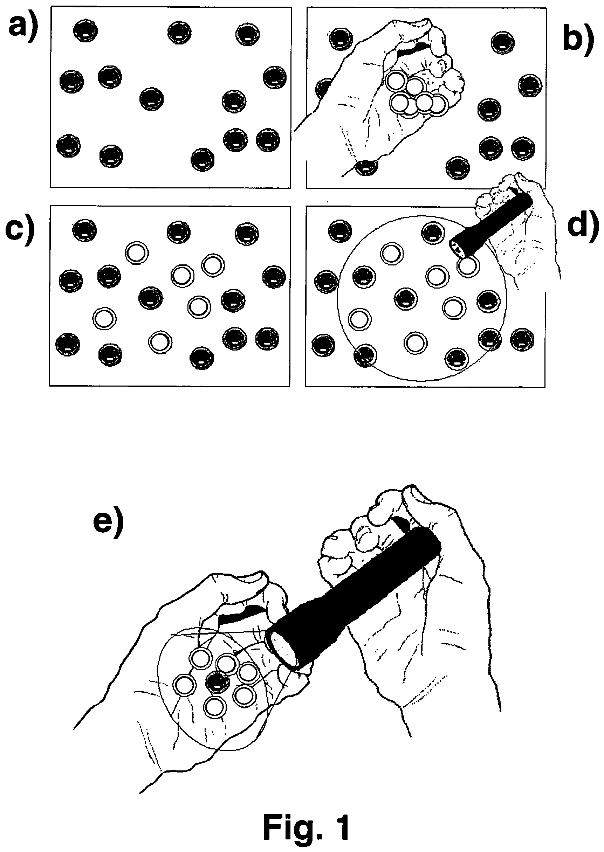

Fig. 1 shows - schematically - an example of an embodiment of a method according to the invention, in which new nodes are to be integrated into an existing sensor network. In the sensor network a multitude of sensor nodes are distributed in a pre-definable environment. In Fig. 1a) a part of the environment of the sensor network covered by the sensor nodes is depicted. The dark dots represent individual sensor nodes that are able to exchange information among each other over a radio channel. All data is - as common in practice - transmitted encrypted.

The situation as depicted in Fig. 1a) shows the network at such a moment where the network has already been running stable for a certain time. A situation can occur where nodes break down, e.g., due to hardware problems or consumption of battery, and the operator of the network judges coverage of the area as insufficient. As depicted in Fig. 1b), the operator will decide to deploy new nodes in such an area in order to improve coverage again. After deployment, the new nodes - depicted in light colors - will have mixed in a random distribution with the old nodes of the existing network, as it is depicted in Fig. 1c).

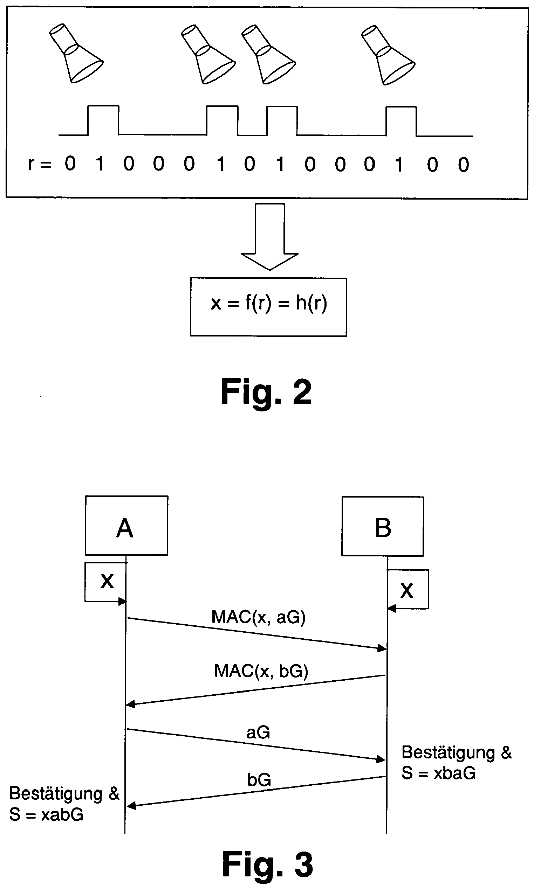

In a next step, depicted in Fig. 1d), according to the invention certain information to establish a shared secret is transferred to a subset of sensor nodes over a secure out of band channel, which is separated from the radio channel. In the depicted embodiment the out of band channel is a light-optical out of band channel. Concretely, the subset of sensor nodes is exposed to a defined temporal sequence of light impulses. The light impulses are generated by a torch. The manipulated subset includes those nodes that are within the cone of light represented in Fig. 1d). The subset includes all new nodes and some of the old nodes of the existing network. As it will be described further in detail below, the OOB message, i.e. the temporal sequence of light impulses, is used to distribute an authenticated symmetric key. The generation of the key on the base of the OOB message will be described in detail in the context of Fig. 3. After successful generation of the key the old nodes of the network that have received the light impulses act as connector or as bridge, being able to exchange encrypted data with the new nodes, as well as with the rest of the nodes of the existing network.

In Fig. 1e) a situation is depicted where the sensor nodes are exposed to the light impulses in a controlled environment, so the security of the method further increases. Moreover, together with the new nodes only one old node of the network is irradiated with light, which also serves an increase of security. If the only old node is a node that had been inserted by a malicious attacker into the network and which consequently does not dispose of a key valid in the old network, this node can hence not act as connector between the nodes to be newly integrated into the network, and the rest of the nodes of the network. Thus, when the network operator finds that the new nodes are not integrated into the network, he will know that the old node that was manipulated by the OOB message must have been a malicious node of an attacker. The operator can repeat the procedure with another old sensor node, but he does not need to be afraid that the attacker could have gained access to the network by the inserted node.

Fig. 2 shows in a scheme a temporal sequence of optical impulses, to which the subset of sensor nodes as explained in the context of Fig. 1d) is exposed. The sensor nodes include a light-sensitive element, which samples the received intensity values at predefined intervals and emits a signal if a threshold intensity is exceeded. The sensor nodes translate the emitted light impulses to a binary sequence of numbers r, wherein a "1" is generated if the light intensity at a given instant is found to be over a threshold intensity, otherwise, a "0" is generated if the threshold intensity has fallen below. In order to generate a shared secret x with well defined length and structure, some kind of normalization function f() is applied to the binary sequence of numbers r. In the case shown concretely, this is a hash function h().

Fig. 3 shows schematically an example of an embodiment of the authentication process and the agreement on a new key on the base of the shared secret x which was announced to a subset of nodes - as described above - over a secure OOB channel. For reasons of clarity, the processes of authentication and key exchange are illustrated in Fig.3 with the example of Alice (A) and Bob (B). The depicted situation needs to be transferred to the case of n sensor nodes. For the example being considered the process is always the same, independent of whether it is a new sensor or a sensor that has already been part of the network. Each sensor can hence take the role of Alice or of Bob. In case two sensors already know each other, the application of the protocol is not necessary.

For the purpose of authentication, both Alice and Bob first of all generate a commitment, respectively. In the depicted embodiment a MAC (message authentication code) is applied to the shared secret x, as well as to the product aG (Alice) or bG (Bob). G stands for a generator according to the ECDH algorithm (elliptic curve Diffie-Hellmann), and a and b are random numbers, respectively, with $\{a, b\} \in \mathbb{Z}.$ The confirmation is effected by exchange of the public parameters aG for Alice and bG for Bob. The new key S is determined by combining the previously shared secret x with the ECDH exchange, so that S = xdaG = xabG.

For the general case of $n$ nodes, the described method is performed as follows:

First of all, a sensor node $N_S$ receives the secret $x \in \mathbb{Z}$ over the OOB channel. Then, the sensor node $N_S$ sends the value MAC(x, $k_S$G) to all sensor nodes $N_i$ that are within its transmission range. From all the sensor nodes $N_i$ the sensor node S receives in return the values MAC (x, $k_i$G). In a next step the sensor node sends the value $k_S$G to all $N_i$. For confirmation, this exchange is executed also in the opposite direction, respectively. Finally, all $N_i$ store the value $xk_S k_i$G as new key S.

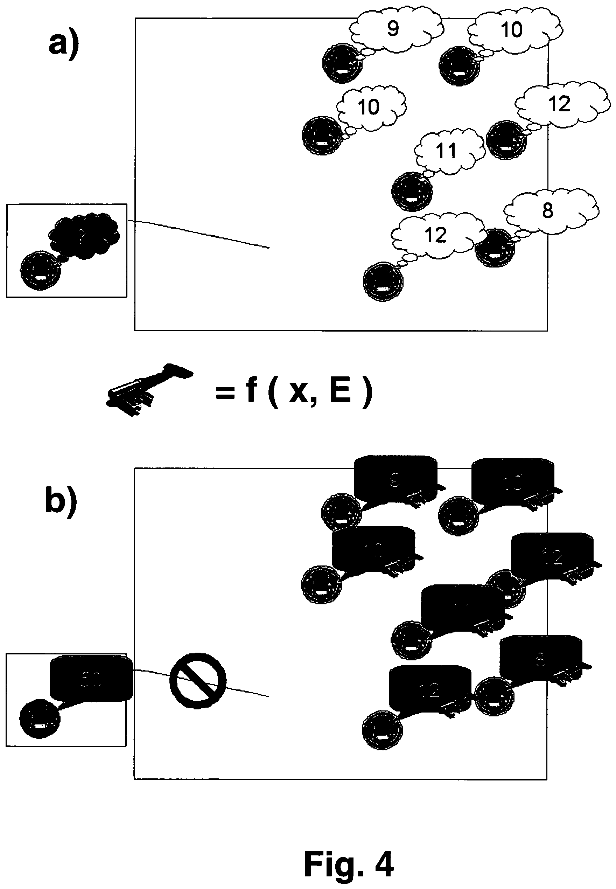

Fig. 4 shows schematically an example of an embodiment of a method according to the invention, wherein sensor nodes are excluded from an existing sensor network. In Fig. 4a) a multitude of sensor nodes is depicted, whereby the values in the clouds attributed to each node represent the corresponding measured values of the sensor nodes. It is assumed that they are, for example, measured temperature values. The sensor node depicted separately is also part of the network, but it does provide inappropriate measured values, for example due to a de-calibration or a bad positioning, and is hence to be excluded from the network.

As already explained several times, a defined information is transferred to the sensor nodes over a secure out of band channel, so the sensor nodes bear a shared secret x. In order to form a new key, the shared secret x is combined with the measured values of the individual sensor nodes. To this end, first of all a value is computed from the measured values m of a node $N_j$, which in the following will be referred to as evidence E. For the evidence $E_{Nj}$ of a node $N_j$ consequently $E_{Nj} = f(m_1, m_2, ... m_n)$ is valid, wherein f can be a function programmed into the node before the initial operation of the network or can be transmitted itself over the OOB channel. The function f can, for example, do a non-linear matching of ranges of measured values on individual values, for example in such a form, that temperature ranges are matched on integers as follows:

$$f(m_i) = 1 \text{ for } m_i < 20^\circ C$$

$$f(m_i) = 2 \text{ for } 20^\circ C < m_i < 25^\circ C$$

$$f(m_i) = 3 \text{ for } 25^\circ C < m_i < 30^\circ C$$

$$f(m_i) = 4 \text{ for } 30^\circ C < m_i$$

Alternatively, f can be a step function, so the evidence is a binary value based on a threshold of the sensed data. Thus, it can be checked, for example, whether a detected intensity of light is above a pre-configurable threshold or not. Alternatively, the function f can also deliver the average value of the last n measurements of a sensor.

If the OOB message is restricted to a relatively small geographic area, the sensors triggered by the message are also positioned relatively close to each other, so the assumption is justified that the expected evidences E for all triggered nodes are within a rather restricted range. If the key distribution with the OOB message x proliferates along with the evidence E, this results in the same key for all nodes with the same evidence. Those nodes that are not able to generate an adequate evidence will not be able to complete the bootstrapping of a new key. The lack of the new key results in that these nodes do no more find access to the network and are hence excluded from it. This is schematically illustrated in Fig. 4b) for the sensor node with the measured value of a temperature of 50.

It has been assumed that the function f is pre-configured in the sensor network, because the individual nodes cannot be handled any more after deployment. Still, a pre-configured function f limits the evidences that can be generated and, consequently, also the exclusion criteria. To avoid this problem the OOB message can be used to transmit, in addition to the shared secret, a separate parameter $O_i$ to the nodes, wherein the parameter includes information regarding the generation of the evidence. In this sense, the parameter can include information like a start of an interval, the width of measurement ranges, the number of measurements that are to be considered for averaging, and the like. In this case the function becomes $E_{Nj} = f(O_1, O_2, ..., O_n, m_1, m_2, ..., m_n)$, wherein $O_j$ are the parameters sent along with the OOB message.

In case the described method is applied continuously, the evidence is not used in values that are transmitted over the wireless channel. Consequently, there is no need to perform expensive key exchange protocols. Instead, the sensor nodes can use a key stream based on a current value and a previous value of the key. It is advantageous though to have synchronization points in order to account for glitches in the network and/or missing epochs.

Regarding further advantageous embodiments of the method according to the invention and in order to avoid repetitions, it has to be referred to the general part of the description, as well as to the attached claims.

Finally, it is particularly important to point out that the embodiments of the invention as described above only serve as illustration of the claimed teaching, but that they do by no means restrict the latter to the given examples of an embodiment.

## Claims

1. A method for operating a wireless sensor network, wherein the sensor network comprises a multitude of sensor nodes for sensing data, the sensor nodes being distributed within a pre-definable environment, and wherein the sensor nodes can exchange information among each other via encrypted data transmissions over a radio channel,
   **characterized in that** for the purpose of integrating new sensor nodes into the sensor network a subset of sensor nodes is manipulated by transferring, from the outside of the subset, a defined information to the sensor nodes of the subset over a secure out of band, OOB, channel, wherein said subset of sensor nodes includes a number of sensor nodes of the existing network, called old sensor nodes, as well as the sensor nodes to be integrated, called new sensor nodes,

   wherein the manipulated sensor nodes use the defined information to establish a shared secret (x) and to mutually authenticate based on the shared secret (x),
   wherein the manipulated sensor nodes, after having performed authentication on the base of the shared secret (x), agree on a key (S) in the context of a key exchange protocol, and
   wherein said key S is used for a secure data transmission, and wherein said old sensor nodes act as a bridge or interface by exchanging encrypted data both with the newly integrated sensor nodes and with the rest of the sensor nodes of the sensor network.

2. The method according to claim 1, **characterized in that** the out of band channel OOB is separated logically and/or physically from the radio channel.

3. The method according to claim 1 or 2, **characterized in that** the information is transferred to the subset of sensor nodes in form of a sequence of measured values sensed by the sensor nodes of the subset, and/or by exposing the subset of sensor nodes to a pre-definable temporal sequence of optical and/or acoustic impulses, and/or to a movement.

4. The method according to claim 3, **characterized in that** the sensor nodes of the subset translate the sequence of optical and/or acoustic impulses, the movements and/or the sequence of measured values into a binary sequence of numbers (r).

5. The method according to claim 4, **characterized in that** the binary sequence of numbers (r) is translated into a hash value h(r) that constitutes the shared secret (x) of the manipulated sensor nodes.

**6.** The method according to any of claims 1 to 5, **characterized in that** the sensor nodes of the network are informed about an upcoming manipulation by means of a message, which is preferably generated by a sink node of the network.

**7.** The method according to any of claims 1 to 6, **characterized in that** the manipulation of the new sensor nodes and the old sensor nodes is performed in a controlled environment.

**8.** The method according to any of claims 1 to 7, **characterized in that** only one old sensor node is manipulated together with the new sensor nodes.

**9.** The method according to any of claims 1 to 8, **characterized in that** the authentication is performed by means of a symmetric message authentication code (MAC) computed on the base of the shared secret (x).

**10.** The method according to any of claims 1 to 9, **characterized in that** the key exchange is performed according to the Diffie-Hellmann algorithm or according to a modified Diffie-Hellmann algorithm with simplified public parameters.

**11.** The method according to any of claims 1 to 7, **characterized in that** the information, which is transferred to the subset of sensor nodes over the out of band channel OOB in order to establish a shared secret, is combined with a value called evidence (E) that is generated by the sensor nodes themselves.

**12.** The method according to claim 11, **characterized in that** the evidence (E) is a function (f) of the measured values (m) sensed by the sensor nodes.

**13.** The method according to claim 11, **characterized in that** the evidence (E) is a function (f) of measured values sensed by the sensor nodes and of an additional pre-defined parameter (O).

**14.** The method according to claim 13, **characterized in that** the parameter (O) is transmitted to the sensor nodes along with the information transferred over the out of band channel OOB.

**15.** The method according to claim 13 or 14, **characterized in that** the parameter (O) refers to the starting time of a measurement interval, to the number of measured values (m) that are to be considered for averaging, or to values usable for refinement of exclusion criteria.

**Patentansprüche**

**1.** Verfahren zum Betreiben eines drahtlosen Sensornetzwerks, wobei das Sensornetzwerk eine Vielzahl von Sensorknoten zum Erfassen von Daten umfasst, wobei die Sensorknoten innerhalb einer vorgebbaren Umgebung verteilt sind, und wobei die Sensorknoten mittels verschlüsselter Datenübertragungen über einen Funkkanal Informationen untereinander austauschen können,
**dadurch gekennzeichnet, dass** zum Integrieren neuer Sensorknoten in das Sensornetzwerk eine Untermenge von Sensorknoten manipuliert wird, indem von außerhalb der Untermenge eine definierte Information über einen sicheren Außerband-Kanal, OOB, an die Sensorknoten der Untermenge übertragen wird, wobei die Untermenge der Sensorknoten eine Anzahl von Sensorknoten des bestehenden Netzwerks, alte Knoten genannt, sowie die zu integrierenden Sensorknoten, neue Knoten genannt, umfasst,

wobei die manipulierten Sensorknoten die definierte Information verwenden, um ein gemeinsames Geheimnis (x) zu begründen und sich gegenseitig basierend auf dem gemeinsamen Geheimnis (x) zu authentifizieren, wobei die manipulierten Sensorknoten, nachdem sie eine Authentifizierung auf der Basis des gemeinsamen Geheimnisses (x) durchgeführt haben, im Rahmen eines Schlüsselaustauschprotokolls einen Schlüssel (S) vereinbaren, und wobei der Schlüssel S für eine sichere Datenübertragung verwendet wird, wobei die alten Knoten als eine Brücke oder Schnittstelle wirken, indem sie verschlüsselte Daten sowohl mit den neu integrierten Sensorknoten als auch mit den übrigen Sensorknoten des Sensornetzwerks austauschen.

**2.** Verfahren nach Anspruch 1, wobei der Außerband-Kanal OOB logisch und/oder physikalisch von dem Funkkanal getrennt ist.

**3.** Verfahren nach Anspruch 1 oder 2, wobei die Information an die Untermenge von Sensorknoten in Form einer von den Sensorknoten der Untermenge erfassten Sequenz von Messwerten übertragen wird, und/oder dadurch, dass die Untermenge von Sensorknoten einer vorgebbaren zeitlichen Abfolge von optischen und/oder akustischen Impulsen und/oder einer Bewegung ausgesetzt wird.

**4.** Verfahren nach Anspruch 3, wobei die Sensorknoten der Untermenge die Folge von optischen und/oder akustischen Impulsen, die Bewegungen und/oder die Folge von Messwerten in eine binäre Sequenz von Zahlen (r) übersetzen.

**5.** Verfahren nach Anspruch 4, wobei die binäre Sequenz von Zahlen (r) in einen Hash-Wert h(r) übersetzt wird, der das gemeinsame Geheimnis (x) der manipulierten Sensorknoten darstellt.

**6.** Verfahren nach einem der Ansprüche 1 bis 5, wobei die Sensorknoten des Netzwerks über eine bevorstehende Manipulation mittels einer Nachricht informiert werden, die vorzugsweise von einem Senken-Knoten des Netzwerks erzeugt wird.

**7.** Verfahren nach einem der Ansprüche 1 bis 6, wobei die Manipulation der neuen Sensorknoten und der alten Sensorknoten in einer kontrollierten Umgebung durchgeführt wird.

**8.** Verfahren nach einem der Ansprüche 1 bis 7, wobei nur ein alter Sensorknoten zusammen mit den neuen Sensorknoten manipuliert wird.

**9.** Verfahren nach einem der Ansprüche 1 bis 8, wobei die Authentifizierung mittels eines symmetrischen Nachrichtenauthentifizierungscodes (MAC) erfolgt, der auf der Basis des gemeinsamen Geheimnisses (x) berechnet wird.

**10.** Verfahren nach einem der Ansprüche 1 bis 9, wobei der Schlüsselaustausch nach dem Diffie-Hellmann-Algorithmus oder nach einem modifizierten Diffie-Hellmann-Algorithmus mit vereinfachten öffentlichen Parametern durchgeführt wird.

**11.** Verfahren nach einem der Ansprüche 1 bis 7, wobei die Information, die über den Außerband-Kanal OOB auf die Untermenge von Sensorknoten übertragen wird, um ein gemeinsames Geheimnis zu erzeugen, mit einem Wert kombiniert wird, Evidenz (E) genannt, der von den Sensorknoten selbst generiert wird.

**12.** Verfahren nach Anspruch 11, wobei die Evidenz (E) eine Funktion (f) der von den Sensorknoten erfassten Messwerte (m) ist.

**13.** Verfahren nach Anspruch 11, wobei die Evidenz (E) eine Funktion (f) von von den Sensorknoten erfassten Messwerten und eines zusätzlichen vordefinierten Parameters (O) ist.

**14.** Verfahren nach Anspruch 13, wobei der Parameter (O) zusammen mit der über den Außerband-Kanal OOB übertragenen Information an die Sensorknoten übertragen wird.

**15.** Verfahren nach Anspruch 13 oder 14, wobei sich der Parameter (O) auf die Startzeit eines Messintervalls, auf die Anzahl von Messwerten (m), die für eine Mittelung zu berücksichtigen sind, oder auf zur Verfeinerung von Ausschlusskriterien nutzbare Werte bezieht.

**Revendications**

**1.** Procédé pour faire fonctionner un réseau de capteurs sans fil, dans lequel le réseau de capteurs comprend une multitude de noeuds de capteur pour capter des données, les noeuds de capteur étant répartis dans un environnement pré-définissable, et dans lequel les noeuds de capteur peuvent échanger des informations entre eux via des transmissions de données chiffrées sur un canal radio,
**caractérisé en ce que** dans le but d'intégrer de nouveaux noeuds de capteur dans le réseau de capteurs, un sous-ensemble de noeuds de capteur est manipulé en transférant, depuis l'extérieur du sous-ensemble, une information définie aux noeuds de capteur du sous-ensemble sur un canal hors bande, OOB, sécurisé, où ledit sous-ensemble de noeuds de capteur inclut un nombre de noeuds de capteur du réseau existant, appelés anciens noeuds de capteur, ainsi que les noeuds de capteur à intégrer, appelés nouveaux noeuds de capteur,
dans lequel les noeuds de capteur manipulés utilisent l'information définie pour établir un secret partagé (x) et pour s'authentifier mutuellement sur la base du secret partagé (x),
dans lequel les noeuds de capteur manipulés, après avoir effectué une authentification sur la base du secret partagé (x), se mettent d'accord sur une clé (S) dans le contexte d'un protocole d'échange de clé, et dans lequel ladite clé S est utilisée pour une transmission de données sécurisée, et dans lequel lesdits anciens noeuds de capteur jouent le rôle d'un pont ou d'une interface en échangeant des données chiffrées avec les noeuds de capteur nouvellement intégrés et avec le reste des noeuds de capteur du réseau de capteurs.

**2.** Procédé selon la revendication 1, **caractérisé en ce que** le canal hors bande OOB est séparé logiquement et/ou physiquement du canal radio.

**3.** Procédé selon la revendication 1 ou 2, **caractérisé en ce que** les informations sont transférées au sous-ensemble de noeuds de capteur sous la forme d'une séquence de valeurs mesurées captées par les noeuds de capteur du sous-ensemble, et/ou en exposant le sous-ensemble de noeuds de capteur à une séquence temporelle pré-définissable d'impulsions optiques et/ou acoustiques, et/ou à un mouvement.

**4.** Procédé selon la revendication 3, **caractérisé en ce que** les noeuds de capteur du sous-ensemble traduisent la séquence d'impulsions optiques et/ou acoustiques, les mouvements et/ou la séquence de valeurs mesurées en une séquence binaire de nombres (r) .

5. Procédé selon la revendication 4, **caractérisé en ce que** la séquence binaire de nombres (r) est traduite en une valeur de hachage h(r) qui constitue le secret partagé (x) des noeuds de capteur manipulés.

6. Procédé selon l'une quelconque des revendications 1 à 5, **caractérisé en ce que** les noeuds de capteur du réseau sont informés d'une manipulation imminente au moyen d'un message, qui est de préférence généré par un noeud collecteur du réseau.

7. Procédé selon l'une quelconque des revendications 1 à 6, **caractérisé en ce que** la manipulation des nouveaux noeuds de capteur et des anciens noeuds de capteur est effectuée dans un environnement contrôlé.

8. Procédé selon l'une quelconque des revendications 1 à 7, **caractérisé en ce qu'**un seul ancien noeud de capteur est manipulé conjointement avec les nouveaux noeuds de capteur.

9. Procédé selon l'une quelconque des revendications 1 à 8, **caractérisé en ce que** l'authentification est effectuée au moyen d'un code d'authentification de message (MAC) symétrique calculé sur la base du secret partagé (x).

10. Procédé selon l'une quelconque des revendications 1 à 9, **caractérisé en ce que** l'échange de clé est effectué selon l'algorithme Diffie-Hellmann ou selon un algorithme Diffie-Hellmann modifié avec des paramètres publics simplifiés.

11. Procédé selon l'une quelconque des revendications 1 à 7, **caractérisé en ce que** les informations, qui sont transférées au sous-ensemble de noeuds de capteur sur le canal hors bande OOB afin d'établir un secret partagé, sont combinées avec une valeur appelée preuve (E) - qui est générée par les noeuds de capteur eux-mêmes.

12. Procédé selon la revendication 11, **caractérisé en ce que** la preuve (E) est une fonction (f) des valeurs mesurées (m) captées par les noeuds de capteur.

13. Procédé selon la revendication 11, **caractérisé en ce que** la preuve (E) est une fonction (f) de valeurs mesurées captées par les noeuds de capteur et d'un paramètre pré-défini additionnel (0).

14. Procédé selon la revendication 13, **caractérisé en ce que** le paramètre (0) est transmis aux noeuds de capteur avec les informations transférées sur le canal hors bande OOB.

15. Procédé selon la revendication 13 ou 14, **caractérisé en ce que** le paramètre (0) se rapporte au temps de début d'un intervalle de mesure, au nombre de valeurs mesurées (m) qui doivent être considérées pour un moyennage, ou à des valeurs utilisables pour l'affinement de critères d'exclusion.

**Fig. 1**

r = 0 1 0 0 0 1 0 1 0 0 0 1 0 0

$$x = f(r) = h(r)$$

# Fig. 2

A

B

X

X

MAC(x, aG)

MAC(x, bG)

aG

bG

Bestätigung &
S = xbaG

Bestätigung &
S = xabG

# Fig. 3

a)

$$= f ( x, E )$$

b)

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1513288 A2
- EP 1335563 A